# EUROPÄISCHE PATENTANMELDUNG

(11) **EP 1 912 326 A1**
(43) Veröffentlichungstag der Anmeldung: **16.04.2008**
(21) Anmeldenummer: 07019687.8
(22) Anmeldetag: 09.10.2007
(51) Int. Cl.: H02P 7/00, H02P 29/02, F04D 27/02

(54) **Strombegrenzungseinrichtung für elektronische Regler oder Steller von Lasten mit nichtlinearer Strom-Spannungs-Kennlinie**

(30) Priorität: 13.10.2006 DE 102006049080
(71) Anmelder: Sitronic Ges. Für Elektrotechnische Ausrüstung Mbh & Co. Kg, 71116 Gärtringen (DE)
(72) Erfinder: Zametzky, Klaus, 91126 Schwabach (DE)
(74) Vertreter: Kohler Schmid Möbus

(57) **Zusammenfassung**

Eine elektronische Strombegrenzungseinrichtung ist in Spannungs- oder Stromreglern für Lasten mit nicht linearer Strom- Spannungs- Kennlinie (2) vorgesehen. Der Laststrom wird in Abhängigkeit von der Lastspannung begrenzt. Die Strombegrenzungslinie (1) weist ein nicht lineares Verhalten mit Abschnittsweise mindestens zwei unterschiedlichen Gradienten, die nicht null oder unendlich sind, auf.

## Beschreibung

Die Erfindung betrifft eine Strombegrenzungseinrichtung für elektronische Regler oder Steller, die den Strom durch oder die Spannung über einer Last mit nichtlinearer Strom- Spannungskennlinie regeln oder stellen, insbesondere die Strombegrenzungseinrichtung für einen Gebläseregler in einem Kraftfahrzeug.

Derartige Einrichtungen sind allgemein bekannt. In der Regel umfassen die bekannten Einrichtungen Schaltungen, welche die Spannung über einer Last, wie z.B. einen Elektromotor, regeln. Viele dieser Regler beinhalten eine Einrichtung, die den maximal möglichen Last- bzw. Motorstrom begrenzen und somit einen Kurzschluss- bzw. Überlastschutz realisieren. Nähert sich der Motorstrom I_{Motor} dem Grenzwert Iₘₐₓ, so begrenzt die Strombegrenzungseinrichtung aktiv den Motorstrom um ihn unterhalb dieses Grenzwertes Iₘₐₓ zu halten. Iₘₐₓ ist meist keine Konstante, sondern eine Variable, die in Abhängigkeit von der Motorspannung U_{Motor} zeitkontinuierlich eingestellt wird. Der Zusammenhang Iₘₐₓ = f (U_{Motor}) ist bei bekannten Spannungsreglern mit Strombegrenzungseinrichtungen für Gebläse linear, obwohl Gebläsemotoren im Allgemeinen eine nichtlineare Kennlinie I_{Motor} = f (U_{Motor}) mit progressiv steigendem Funktionsgraphen aufweisen.

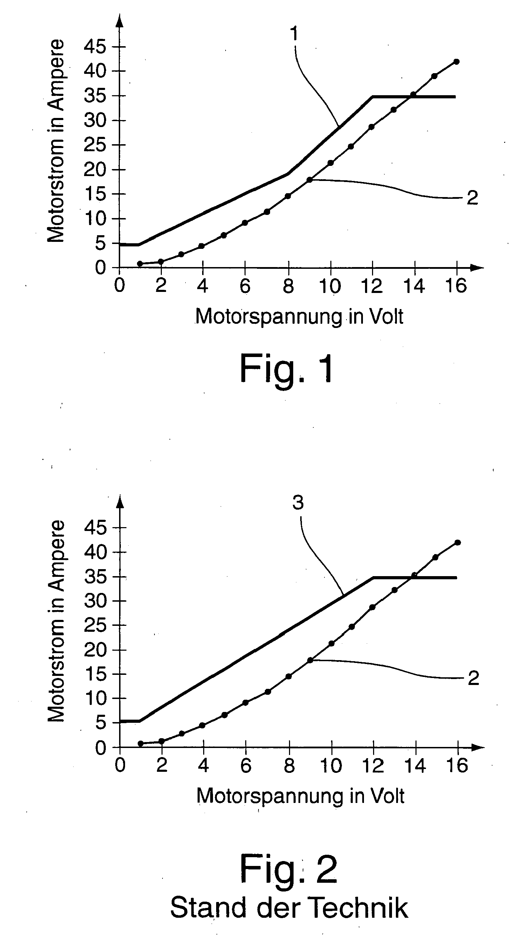

Aus Figur 2 ist der Zusammenhang zwischen Motorspannung und Motorstrom (die Lastkennlinie des Motors) sowie der Zusammenhang zwischen Motorspannung und Maximalstromgrenze einer bekannten Spannungsregelung mit Strombegrenzung ersichtlich. Die dünne, gepunktete Kennlinie 2 zeigt den Zusammenhang I_{Motor} = f (U_{Motor}). Es ist zu erkennen, dass die Motorkennlinie 2 einen nichtlinearen Charakter aufweist. Bekannte Spannungsregelungen mit Strombegrenzungseinrichtungen führen zu einer linearen Strombegrenzung in Abhängigkeit von der Motorspannung. Spannungsregelungen mit Strombegrenzungseinrichtung weisen eine Schaltung auf, die die Motorspannung erfasst und in Abhängigkeit von dieser den Wert Iₘₐₓ für die Strombegrenzung einstellt. Dieser Grenzwert ist in Figur 2 durch die schwarze, dicke Linie 3 gekennzeichnet. Bei 0V - 1V Motorspannung beträgt der Grenzwert für den Motorstrom 5A. Auch bei 0V Motorspannung muss ein gewisser Strom zulässig sein, sonst läuft der Motor nicht an. Der maximal zulässige Motorstrom beträgt 35A. Diesem ist in Kennlinie 3 für die Strombegrenzung eine Motorspannung U_{Motor} > 12V zugeordnet. Die Strombegrenzung lässt einen Maximalstrom von 35A also nur zu, wenn die Motorspannung mindestens 12V beträgt. In jedem Fall darf die Kennlinie 3 der Strombegrenzung die Motorkennlinie 2 im Bereich 0V < U_{Motor} < 12V nicht schneiden, da die Spannungsregelung mit Strombegrenzungseinrichtung die Motorspannung dann auf Werte unter 12V begrenzen würde, und die gewünschte Motorleistung, im Falle eines Gebläsereglers die gewünschte Gebläseleistung, nicht zur Verfügung stünde. Um dies über die Serie zu garantieren, muss Kennlinie 3 für die Strombegrenzung Iₘₐₓ = f(U_{Motor}) einen gewissen Abstand zur Motorkennlinie 2 einhalten, der auch Toleranzen berücksichtigt. Der Abstand sollte jedoch nur so groß wie nötig sein, um die Verlustleistung in einer nach dem Linearprinzip arbeitenden Spannungsregelung mit Strombegrenzungseinrichtung im Falle eines Ansprechens der Strombegrenzung so niedrig wie möglich zu halten. Wird ein Gebläseregler mit linearer Strombegrenzung 3 gemäß Figur 2 an 14V (dies ist üblicherweise die Bordspannung eines Personenkraftwagens) Versorgungsspannung betrieben, und eine Motorspannung von 7V eingestellt, so wird im Überlastfall, beispielsweise bei einer Schwergängigkeit des Motors, die Strombegrenzung ein Laststrom auf 22A begrenzen. Die Verlustleistung in einem nach dem Linearprinzip arbeitenden Regler beträgt in diesem Betriebsfall 7V x 22A = 154W.

Der Erfindung liegt die Aufgabe zu Grunde, eine Strombegrenzungseinrichtung mit verbesserter Anpassung der Strombegrenzung an die Motorkennlinie zu schaffen.

Diese Aufgabe wird durch eine Strombegrenzungseinrichtung für elektronische Regler oder Steller der eingangs genannten Art gelöst, bei der die Strombegrenzungslinie ein nicht lineares Verhalten mit Abschnittsweise mindestens zwei unterschiedlichen Gradienten, die nicht null oder unendlich sind, aufweist.

In einfacher technischer Umsetzung kann die Approximation durch mehrere miteinander verbundene Geradenstücke ausgeführt sein. Es wird eine Approximation der Strombegrenzungskennlinie an die Strombegrenzungslinie durch eine Geradenfolge mit n Knickpunkten realisiert. Hierdurch entsteht eine Regelung mit Strombegrenzung, die den Nennstrom des Lastmotors liefert, jedoch im Fehlerfall den Strom auf geringere, unkritischere Werte begrenzt als herkömmliche Strombegrenzungen. Dies hat den Vorteil, dass sowohl der Motor als auch die Regelungseinrichtung selbst geschont werden. Die Erfindung ist besonders für Gebläseregler in Kraftfahrzeugen geeignet.

Ein bevorzugtes Ausführungsbeispiel der Erfindung ist in der Zeichnung schematisch dargestellt und wird anhand der Zeichnung näher erläutert.

Es zeigt:
- Figur 1: die Kennlinienfunktion einer erfindungsgemäßen Strombegrenzung unter Berücksichtigung der Strombegrenzungslinie (Motorkennlinie);
- Figur 2: die Kennlinienfunktion einer Strombegrenzung nach dem Stand der Technik.

Auch aus Figur 1 ist der Zusammenhang zwischen Motorspannung und Motorstrom ersichtlich. Die dünne, gepunktete Kennlinie 2 in Figur 1 zeigt, wie in Fig. 2, den Zusammenhang I_{Motor} = f (U_{Motor}). Es ist zu erkennen, dass die Motorkennlinie 2 einen nichtlinearen Charakter aufweist. Figur 1 zeigt die Motorkennlinie 2 sowie eine ebenfalls nicht lineare Strombegrenzungskennlinie 1. Die Approximation erfolgt hier durch zwei Geraden unterschiedlicher Steigung mit einem Knickpunkt bei U_{Motor} = 8V. Eine Strombegrenzungseinrichtung für einen elektronischen Regler, die eine Strombegrenzungskennlinie 1 nach Figur 1 aufweist, begrenzt beispielsweise den Strom durch schwergängigen Motor bei einer Sollspannung von 7V auf 17A. Bei einer Versorgungsspannung von 14V ergibt sich damit eine Verlustleistung von 119W an der nach dem Linearprinzip arbeitenden elektronischen Regelung. Im Vergleich dazu begrenzt Strombegrenzungseinrichtung nach Figur 2 den Motorstrom in diesem Beispiel auf 22A und hat damit hat die elektronische Regelung eine Verlustleistung von 154W. Man erkennt, dass die nichtlineare Strombegrenzung nach Figur 1 einen besseren Schutz bietet als die lineare nach Figur 2. Der Vorteil, der sich bei Verwendung einer nichtlinearen Strombegrenzungskurve 1 einstellt, wächst mit dem Grad der Krümmung der Motorkennlinie 2.

## Patentansprüche

1. Elektronische Strombegrenzungseinrichtung in Spannungs- oder Stromreglern für Lasten mit nicht linearer Strom- SpannungsKennlinie (2), wobei der Laststrom in Abhängigkeit von der Lastspannung begrenzt wird, **dadurch gekennzeichnet, dass** die Strombegrenzungslinie (1) ein nicht lineares Verhalten mit Abschnittsweise mindestens zwei unterschiedlichen Gradienten, die nicht null oder unendlich sind, aufweist.

2. Strombegrenzungseinrichtung nach Anspruch 1, **dadurch gekennzeichnet, dass** die Gestalt der Strombegrenzungskennlinie (1) an die nichtlineare Gestalt der Lastkennlinie (2) angenähert ist.

3. Strombegrenzungseinrichtung nach Anspruch 1 oder 2, **dadurch gekennzeichnet, dass** die Strombegrenzungskennlinie (1) gegen die Lastkennlinie (2) so verschoben ist, dass der Spannungsregler auch unter Berücksichtigung aller Schaltungstoleranzen in allen Spannungsbereichen den Nennstrom der Last liefert.

4. Strombegrenzungseinrichtung nach einem der vorhergehenden Ansprüche, **dadurch gekennzeichnet, dass** die Strombegrenzungskennlinie (1) durch mehrere miteinander verbundene Geradenstücke angenähert ist.
